# EUROPEAN PATENT APPLICATION

(11) **EP 4 571 903 A1**
(43) Date of publication of application: **18.06.2025**
(21) Application number: 23216395.6
(22) Date of filing: 13.12.2023
(51) Int. Cl.: H01M 8/04089, H01M 8/0432, H01M 8/0438, H01M 8/0444, H01M 8/04746

(54) **A FUEL CELL WITH A MULTI-PARAMETER MEASUREMENT SYSTEM**

(71) Applicant: Nederlandse Organisatie voor toegepast-natuurwetenschappelijk Onderzoek TNO, 2595 DA 's-Gravenhage (NL)
(72) Inventor: CHENG, Lun-Kai, 2595 DA's-Gravenhage (NL); XU, Man, 2595 DA's-Gravenhage (NL)
(74) Representative: V.O.

(57) **Abstract**

This invention pertains to a fuel cell with a housing structure, anode, cathode, electrolyte medium, fuel and oxidant input mechanisms, and an energy output interface. An optical measurement system is provided, embedded within the fuel cell. The optical measurement system is configured to monitor multiple operational parameters. At least one optical fiber is configured to extend within the fuel cell, wherein multiple sensing points are distributed along said at least one optical fiber. Each sensing point is configured to detect one or more operational parameters within the fuel cell.

## Description

### FIELD OF THE INVENTION

The invention relates to an fuel cell for generating electrical power Furthermore, the invention relates to a method of arranging an fuel cell. Additionally, the invention relates to a multi-parameter optical measurement system configured and adapted to be capable of being integrated in an fuel cell. The invention also relates to a use of a multi-parameter optical measurement system for monitoring operational parameters within an fuel cell.

### BACKGROUND TO THE INVENTION

Fuel cells are important devices for the growing demand for sustainable and efficient energy sources. Fuel cells convert chemical energy from fuel into electricity through a chemical reaction with oxygen or another oxidizing agent. The development and optimization of fuel cells face several substantial challenges, largely stemming from the complexities inherent in their operation and the limitations of current monitoring and measurement technologies.

Operational parameters include, but are not limited to, temperature distribution, pressure levels, fluid flow dynamics, chemical reactions within the cell, etc. The accurate and real-time monitoring of these parameters can be important for the optimal performance, durability and/or safety of the fuel cells.

The internal architecture of a fuel cell is composed of an array of components such as electrodes, electrolytes, and separation plates, all intricately assembled to facilitate the electrochemical reactions. Central to this architecture are the flow channels, often only a few millimeters wide, which are critical for the movement of reactants and products (such as hydrogen, oxygen, and water) within the cell. These narrow channels present significant monitoring challenges.

Furthermore, the flow channels in fuel cells can vary in size and shape, each presenting distinct flow conditions and temperature distributions. This diversity necessitates a versatile and adaptive monitoring approach capable of accurately capturing the dynamic operational environment within these channels. Uniform control and measurement of these conditions using external sensors is not only challenging but often ineffective, as these sensors cannot be positioned close enough to the critical reaction sites within the cell.

Consequently, there is a strong desire for an innovative solution that overcomes the drawbacks of existing sensor technologies, providing a means for more effective and accurate monitoring of the internal operational parameters of fuel cells.

### SUMMARY OF THE INVENTION

It is an object of the invention to provide for a method and a system that obviates at least one of the above mentioned drawbacks.

Additionally or alternatively, it is an object of the invention to improve the design of a fuel cell.

Additionally or alternatively, it is an object of the invention to provide for a fuel cell with enhanced parameter monitoring capabilities.

Thereto, the invention provides for a fuel cell, comprising a housing structure; an anode and a cathode contained within the housing structure, wherein the anode and cathode are configured for a chemical reaction; an electrolyte medium positioned to facilitate ion transfer between the anode and the cathode; a fuel input mechanism for supplying fuel to the anode; an oxidant input mechanism for supplying an oxidant to the cathode; an energy output interface configured to output electrical energy generated by the fuel cell system; and wherein a multi-parameter optical measurement system is integrated within the fuel cell, the multi-parameter optical measurement system being configured to monitor multiple operational parameters, wherein the multi-parameter optical measurement system comprises at least one optical fiber configured to extend within the fuel cell, wherein multiple sensing points are distributed along said at least one optical fiber, and wherein each sensing point is configured to detect one or more operational parameters within the fuel cell.

The fuel cell is equipped with a multi-parameter optical measurement system, integrating optical fibers with multiple sensing points to monitor operational parameters. Advantageously, the system has the ability to provide real-time, localized, and comprehensive data regarding the fuel cell's operational conditions. This precision is achieved through the distributed sensing points along the optical fibers, enabling detailed monitoring within the complex structure of the fuel cell, thus enhancing its efficiency and safety.

The distributed sensing points along the optical fibers allow for localized measurements of various operational parameters. Each sensing point acts as a discrete sensor, capable of monitoring conditions at its specific location within the fuel cell. This localized monitoring is important for detecting and analyzing conditions that vary across different parts of the fuel cell, such as temperature gradients, pressure differences, or the concentration of gases.

Fuel cells, especially those used in industrial applications, often have intricate internal structures with various components like electrodes, membranes, and flow channels. The complexity of these structures can make it challenging to monitor operational parameters uniformly across the entire system. The distributed sensing points on the optical fibers provide a means to obtain detailed insights into these complex structures, enabling the detection of operational anomalies or inefficiencies that might not be noticeable with more conventional, less granular monitoring methods.

The optical fibers with distributed sensing points can offer the advantage of real-time data acquisition. This immediacy in monitoring can be important for prompt identification of changing conditions within the fuel cell. For instance, rapid detection of temperature spikes or unexpected pressure changes can prevent potential damage or inefficiencies.

Furthermore, in fuel cells, especially those dealing with high pressures and temperatures, safety is of great importance. The distributed sensing points, using optical fibers that can be arranged easily within various parts of the fuel cell, can detect hazardous conditions like leaks, pressure buildups, or temperature extremes early on. This early detection is important for initiating safety protocols and preventing accidents, thereby ensuring the safety of the operation and personnel.

Through continuous and detailed monitoring, potential issues can be identified and addressed before they escalate into major problems.

It will be appreciated that the multi-parameter optical measurement system can be employed with different types of optical fibers, depending on the required sensitivity and measurement range.

A first sensing point may be located at a first position along the optical fiber, configured to monitor a first operational parameter within the fuel cell. A second sensing point located at a second position along the optical fiber, distinct from the first position, configured to monitor a second operational parameter within the fuel cell. The second operational parameter can be different from the first operational parameter.

Optionally, the fiber optic sensors integrated within the at least one optical fiber of the multi-parameter optical measurement system have a small dimension. In some examples, the optical fiber may have a diameter ranging from approximately 40 micrometers to 125 micrometers, in some examples to 250 micrometers. In this way, interference with the fuel cell operation can be avoided while maintaining the functional integrity and sensitivity to the operational parameters being monitored.

Optionally, the at least one optical fiber is led outside the fuel cell via a fiber feedthrough, which is specifically designed to maintain the integrity and isolation of the fuel cell's internal environment while allowing the optical fiber to exit the housing structure for connection to external monitoring equipment, thereby enabling the multi-parameter optical measurement system to function effectively without compromising the structural and operational integrity of the fuel cell.

Optionally, the multi-parameter optical measurement system further comprises a plurality of sensor types integrated within a same optical fiber, each sensor type being distinct and configured to monitor a specific operational parameter of the fuel cell, and wherein the at least one optical fiber is routed through multiple parts of the fuel cell in order to monitor operational parameters in different regions of the fuel cell.

This configuration ensures a compact and efficient monitoring solution, capable of measuring different parameters simultaneously. By routing this optical fiber through multiple parts of the fuel cell, it can monitor conditions in different regions, offering a comprehensive view of the system's operational status. By consolidating multiple sensors into a single fiber, the system minimizes the need for multiple, separate sensors. This design reduces the space required for sensor installation at the dedicated locations of the complex fuel cell and lowers the complexity of the monitoring system. The compact nature of this design is particularly beneficial in the confined spaces of an fuel cell.

The ability to monitor various parameters simultaneously provides an enhanced view of the fuel cell's operational status to identify possible issues.

The single optical fiber, housing multiple sensors, can be routed through different parts of the fuel cell. This flexibility in routing can be realized by using special optical fiber and ensures that the system can monitor conditions in diverse regions within the fuel cell, from the core reaction areas to peripheral components. Such versatility can be important for tailoring the monitoring system to specific design layouts and operational needs of different fuel cell models.

With sensors distributed throughout the fuel cell, the system can detect changes in operational conditions more effectively. For instance, early detection of abnormal temperature gradients or pressure fluctuations can averting potential malfunctions or damages.

Integrating multiple sensors into a single fiber reduces the overall cost of the monitoring system, both in terms of initial setup and ongoing maintenance. Fewer components mean simpler maintenance routines and lower chances of sensor failures, which translates to reduced operational costs and downtime.

Furthermore, a proximity of different sensor types within a single fiber allows for the cross-validation of data. This proximity can enhance the accuracy of measurements, as anomalies detected by one sensor type can be quickly corroborated by others. Such cross-validation can be important for ensuring the reliability of the data, which forms the basis for all subsequent operational decisions and adjustments in the fuel cell. This can be facilitated by providing a chain of sensors on a same fiber and/or arranging different fibers in close proximity to each other.

In some examples, the routing of the optical fiber can be designed in a meandering manner on a surface of subcomponent of the fuel cell, to enhance the exposure of the fiber to various parts of the fuel cell and improve the accuracy of measurements. Various meandering or winding patterns can be employed. Such pattern may have regular twists and turns resulting in improved coverage. For example, in a meandering pattern, the lines or paths can fold back on themselves in a series of turns, loops, or curves. This pattern can be regular and repeating. However, in some alternative examples, it can be irregular, with varying degrees of curvature and length in the meanders. It will be appreciated that the configuration may depend highly on the surface on which the fiber optic line(s) are provided.

In some examples, the line in a meandering pattern may be unbroken and continuous, with no clear start or end point within the pattern itself. Various curve configurations may be employed. While each individual turn can be unique, meanders often have a repetitive nature, with similar shapes recurring throughout the design. The fiber optic line may frequently change direction, creating an arrangement in which a regular distribution of sensors over an area or surface can be obtained.

In some alternative examples, the routing of the optical fiber can be designed in a helical or coiled manner within the fuel cell, to enhance the exposure of the fiber to various parts of the fuel cell and improve the accuracy of measurements. Such pattern may be advantageous when employed in openings or flow channels within the fuel cell.

Optionally, the multi-parameter optical measurement system includes at least two of, preferably, at least three of: a temperature sensor, a strain sensor, a fluid flow sensor, a fluid characterization sensor, a gas-in-liquid detection sensor, a pressure sensor, a gas sensing sensor, or a chemical composition sensor.

Optionally, each of the sensors is arranged to operate at different locations.

The monitoring of a wide range of operational parameters can be important for the efficient functioning of the fuel cell. By using multiple sensor types, the system can adapt to specific monitoring requirements, for example enhancing its capability to detect and analyze complex flow conditions and other important parameters within the fuel cell.

The diverse sensor inclusion allows the system to be highly adaptable to specific monitoring needs. Depending on the fuel cell's design and operational requirements, appropriate sensors can be selected and integrated. This adaptability is particularly beneficial in customizing the system for different fuel cell designs or for monitoring specific processes within the fuel cell.

The system's ability to detect and analyze complex flow conditions and other important parameters is significantly improved with the inclusion of various sensors. For instance, temperature sensors can detect heat variations indicating potential issues, while strain sensors can monitor structural integrity. Gas sensors provide vital information on gas composition and concentrations.

Temperature can be measured using and optical fiber. For example, a FBG of which the Bragg reflection wavelength is a function of the temperature can be used. FBG type of sensor can be design and manufactured in an array configuration in one single fiber to enable temperature distribution mapping of an area e.g. inside an reaction area to identify location dependency of the reaction. FBG sensors close to each other can provide temperature gradient information e.g. in/cross channel temperature distribution/gradient.

The temperature sensing FBGs may for example be bonded to the functional layers/surfaces, free hanging in the flow channels, etc. Exemplary measurands are: temperature distribution in flow channel, temperature distribution in construction, temperature gradient in channel, etc.

Additionally or alternatively, a FBG attached or bonded to the construction can be used to measure strain changed and operation condition of the construction, e.g. the fuel cell housing, the functional layer, etc. High frequency strain variation can be identified from the strain measurement data with sufficient measurement bandwidth. This strain fluctuation can be related to vibration of the construction. For functional layers, vibration can induce mechanical degradation and hence damage which can be monitored using the FBG strain sensor. Exemplary measurands are: local strain of construction, strain variation of functional layer, vibration of functional layer, degradation of damage of functional layer, etc.

The strain sensing FBG will also be sensitive to temperature. This effect can be canceled out by information achieved using the temperature FBGs.

Additionally or alternatively, flow direction and speed can provide information about condition or operation of the fuel cell. Flow speed and direction be measured by different configuration of FBG sensor including: using addition mechanism to reshape the fiber to generate flow induced vibration of the fiber/FBG; by correlation of thermal response of FBGs on short distance in the same flow channel; by anemometric configuration using a optically heated fiber.

Additionally or alternatively, a high-speed variation of temperature can be monitored by employing a FBG in direct contact with the flow medium. This is identified to be related to the presence/generation of gas bubble in the liquid which has a different temperature and/or thermal capacity from the liquid. A thermocouple cannot be made in an array configuration for measurement at different locations by one single wire.

In a flow channel with known flow speed, the proposed gas bubble detection using FBG can reveal information about bubble generation speed and/or the size of the bubble by detail analysis of the time response. The measurands can be presence of gas bubble in liquid (flow); gas bubble generation rate in liquid (flow); gas bubble size distribution in liquid (flow); presence of liquid in gas flow; or the like.

Additionally or alternatively, a FBG pressure sensor may be employed. FBG in bare optical fiber has a low pressure sensitivity of about -3 pm/MPa. For the detection of low pressure, either the sensitivity of the FBG interrogator needs to be improved or a transducer needs to be used to increase the mechanical response of the FBG. Miniaturized FBG based pressure sensor can be utilized using different types of transducer. Combination of the different sensitivity enhancement solutions can results in pressure sensor for in fuel cell application. Examples are the mini pressure sensor; special phase-shifted FBG and interferometer interrogator.

Additionally or alternatively, a FBG sensor is employed as a hydrogen sensor. Palladium (alloy) has mechanical expansion after absorption of hydrogen. This is used as hydrogen sensor by applying a Pd coating layer from ~100 nm to ~1 micrometer on a FBG. The hydrogen absorption induced coating expansion results in a strain of the FBG fiber. The shift in the FBG wavelength spectrum is a measure of the hydrogen concentration. Different Bragg grating types can be used including standard homogenous FBG, phase-shifted FBG or long period grating (LPG) to achieve the required specifications e.g. sensitivity, multiplexing capability etc.

Additionally or alternatively, a gas concentration sensor is employed. Concentration of (other) gasses in the fuel cell system can be measured with a miniaturized gas sensor e.g. a hollow core fiber sensor. The hollow core fiber (HCF) sensor is based on laser absorption of the gas to be detected. Due to holes in the hollow core fiber connected to the environment, gas will flow into the hollow core. When the pump laser with a wavelength matches to the absorption spectrum of the gas, part of the pump laser power will be absorbed and result in a temperature change of the gas which change the refractive index of the gas in the hollow core. A probe laser can be used to measure the optical path length (OPL) change of the hollow core fiber which is the product of the refractive index of the core and the length L of the hollow core fiber.

Additionally or alternatively, a gas concentration sensor is employed. Using interferometric measurement technology a change in optical path length (OPL) and hence the gas concentration can be measured with high sensitivity. By changing the wavelength of the pump laser, different gasses with different absorption wavelength can be measured using the same probe laser system to enable gas composition measurement. Exemplary measurands can be: gas concentration; gas composition using different absorption wavelengths; gas leakage detection; etc.

Optionally, different sensor types are arranged within the same optical fiber.

Optionally, the at least one optical fiber is arranged within one or more flow channels of the fuel cell, the flow channels being configured to facilitate a flow of fluids within the fuel cell, and wherein the optical fiber follows at least a portion of the path of the one or more flow channels.

This arrangement allows for direct monitoring of fluid dynamics, enabling the detection of changes in flow rates and patterns. Advantageously, fluid behavior can be tracked in real-time, providing insights that can optimize the fuel cell's performance and prevent operational issues.

By placing the optical fibers along the flow channels, the system can capture real-time data on fluid behavior, such as flow rates, fluid pressures and/or other flow characteristics. This precise monitoring can be important for understanding the electrolytic process in greater depth.

The strategic placement of these fibers facilitates early detection of changes or anomalies in the flow, such as blockages, leaks, or irregular flow patterns. Early detection is key to preventing minor issues from escalating into major operational problems.

By tracking fluid dynamics, the system can help optimize the fuel cell's performance. Understanding how fluids move and interact within the fuel cell.

The monitoring can aid in preventive maintenance. By identifying potential issues before they become significant, the system can help reduce downtime and extend the fuel cell's operational lifespan.

The optical fibers can be positioned within the flow channels, which are important pathways for the movement of fluids within the fuel cell, in different ways. The placement ensures that the fibers have direct contact with the fluids, allowing for accurate measurement of flow-related parameters.

The optical fibers incorporate advanced sensor technology, capable of detecting various parameters such as temperature, pressure, and flow rate. These sensors are highly sensitive and can pick up subtle changes in the fluid dynamics within the fuel cell.

Optionally, the fluid channels include both fuel supply channels leading to the anode and oxidant supply channels leading to the cathode. In some examples, the optical fiber extends within at least one of the types of channels.

Optionally, fluid channels are provided adjacent to at least one of the anode or the cathode, wherein the fluid channels are configured for guiding the flow of reactants to and from the anode and cathode, and for managing the distribution of the fuel and the oxidant across the surfaces of the anode and cathode respectively; wherein the fluid channels are also structured to facilitate the removal of by-products produced during the operation of the fuel cell.

Optionally, the optical fiber is embedded within the walls of the fluid channels to protect it from direct exposure to the fluids while allowing for parameter sensing.

Optionally, the optical fiber is bent in a meandering path to improve the distribution of the sensing points.

Optionally, the at least one optical fiber is arranged in one or more layers or plate structures arranged within the housing structure of the fuel cell.

This placement can ensure that the sensors are in close proximity to key operational areas, such as near the anode and cathode. This strategic positioning leads to accurate and direct measurement of relevant parameters, significantly enhancing the system's ability to monitor and control the process effectively. This includes parameters such as temperature gradients, electrical potential differences, and chemical changes at the electrode surfaces. The close proximity enables the sensors to capture minute and rapid changes in these parameters, which may be missed if the sensors were placed further away.

Moreover, this strategic positioning within the layered structures of the fuel cell ensures a comprehensive monitoring scope. As these layers are integral to the fuel cell's design and function, embedding the sensors within them allows for a more complete view of the operational conditions across the entire device. This is particularly important in ensuring uniformity in the process, as it can help identify and rectify any irregularities in real-time, such as uneven temperature distribution or localized chemical imbalances.

The integration of optical fibers into these layers can contribute to the durability and reliability of the measurement system. By being housed within the structural components, the fibers are less susceptible to external damage or displacement during the fuel cell's operation. This aspect can be important in maintaining consistent and long-term monitoring capabilities, which can be important for the effective and safe operation of the fuel cell.

Sensors within the plates/layers might be arranged in straight lines that bend back in a meandering/zigzag pattern, allowing comprehensive monitoring within the fuel cell.

Optionally, the fuel cell includes a series of plate structures positioned adjacent to both the anode and the cathode, these plate structures being configured to support the electrodes and facilitate the distribution of the fuel and the oxidant; each plate structure comprises channels or grooves for the transport of reactants and removal of by-products; and the electrolyte membrane being positioned between the anode and the cathode and is supported by the plate structures, providing a barrier for ion transfer while maintaining physical separation of the reactants. The plate structures may be further configured to enhance the thermal management of the fuel cell system and to contribute to the structural integrity of the cell.

Optionally, at least one optical fiber is integrated within a plate structure positioned adjacent to either the anode or the cathode.

Optionally, the at least one optical fiber is embedded within multiple plate structures.

Optionally, the at least one optical fiber is arranged in a grid pattern within the housing structure, providing a matrix of sensing points for detailed spatial analysis of operational parameters.

Optionally, the measurement system includes multiple optical fibers, each configured to extend within different layers or plate structures of the fuel cell.

Optionally, the at least one optical fiber is glued to the surface of one or more layers or plate structures within the housing structure, such that the optical fiber remains in a fixed position relative to the anode and cathode.

A simplified and cost-effective installation can be obtained. Gluing the fibers can enhance the installation process, as it does not require complex mechanisms or tools to secure the fibers. This simplicity also extends to maintenance; if a sensor needs replacement or repositioning, it can be done with minimal disruption to the fuel cell's overall structure.

By carefully choosing the locations on the layered structures where the fibers are affixed, the sensors can be exposed optimally to the parameters they are meant to measure. For example, placing a temperature sensor in a location where it can best detect the heat generated during the process, or positioning a pressure sensor where it can accurately monitor the internal pressures within the fuel cell.

In alternative examples, the optical fiber can be attached using mechanical clamps or magnetic fixtures instead of gluing. Additionally or alternatively, the surface of the layers or plate structures can be adapted, e.g. textured or patterned, to enhance the adherence of the optical fiber.

Optionally, the at least one optical fiber is attached to a plate structure that is positioned adjacent to either the anode or the cathode.

Optionally, the at least one optical fiber is integrally embedded within one or more layers or plate structures of the fuel cell.

Embedding the fibers provides a robust and secure setup, reducing the risk of damage or displacement during operation. This integration enhances the durability and reliability of the measurement system, ensuring long-term, consistent monitoring capabilities.

By embedding the optical fibers within the structural layers of the fuel cell, they can be better protected from external mechanical stresses and environmental factors that can otherwise cause damage or degradation. This embedded design inherently increases the durability of the fibers, ensuring they remain functional over extended periods, even under harsh operational conditions.

The integration of fibers within the structural layers minimizes the risk of their displacement or damage during the routine operation and maintenance of the fuel cell. In conventional setups, where sensors are externally attached or loosely placed, they are more susceptible to accidental movements or impacts. The embedded design according to the disclosure effectively mitigates these risks.

The secure embedding of optical fibers ensures that they remain in constant and correct alignment with the areas they are monitoring. This stability can be important for providing accurate and consistent data over time. In fuel cell systems, where precise monitoring of parameters like temperature, pressure, and chemical composition can be important, this consistent data collection is invaluable for maintaining optimal operational conditions.

Integrating the fibers within the structural layers allows for a more streamlined and compact design. This integration is particularly beneficial in systems where space is a premium, ensuring that the monitoring system does not add unnecessary bulk or complexity to the fuel cell.

The design can ensure that the fibers are an integral part of the fuel cell's construction, as opposed to being mere add-ons or external attachments. Such integration requires precise engineering to ensure that the fibers are securely embedded without compromising their functionality or the integrity of the fuel cell's structure. It also involves careful selection of materials and fabrication techniques to ensure compatibility between the optical fibers and the structural components of the fuel cell.

In some examples, the optical fiber is woven into a mesh or grid-like structure within the subcomponent of the fuel cell, e.g. the layers or plates, providing a more distributed and integrated sensing capability throughout the fuel cell.

Optionally, the at least one optical fiber is incorporated within plate structures that are parallel to and in direct contact with either the anode or the cathode.

Optionally, the at least one optical fiber is encapsulated within one or more layers.

Optionally, at least one optical fiber is arranged at one or more membranes within the fuel cell, and/or at or adjacent to at least one of an inlet line or outlet line of the fuel cell.

The positioning the optical fibers at strategic locations like membranes and inlet/outlet lines enables targeted monitoring of specific areas where important changes in operational parameters are likely to occur. Such strategic positioning allows for early detection of issues like membrane degradation or flow blockages, contributing to the timely maintenance and optimization of the fuel cell's performance.

By placing optical fibers at membranes, the system can directly monitor parameters that affect the membrane's functionality, such as temperature, pressure, and chemical composition. This can be important because membranes are integral to the process, facilitating ion exchange while preventing the mixing of hydrogen and oxygen gases. Early detection of membrane degradation, a common issue in fuel cells, can prevent operational failures and extend the lifespan of the system.

Similarly, positioning optical fibers at inlet and outlet lines allows for the precise monitoring of flow dynamics, such as the flow rates and composition of water and gases entering and exiting the fuel cell. This is vital for ensuring the efficiency and safety of the process. For example, any blockage or irregularity in flow can significantly impact the system's performance and may pose safety risks. Early detection of such issues through continuous monitoring enables proactive maintenance and adjustments, thus optimizing the fuel cell's performance.

Placing a sensor near the outlet can be more advantageous for detecting water or bubble formation than near the gas inlet.

In some examples, one or more optical fibers are placed in areas prone to wear or leakage to monitor the integrity of these components.

Optionally, the inlet port is configured to facilitate the entry of fuel into a fuel supply system and the entry of an oxidant into an oxidant supply system, ensuring efficient delivery to the anode and cathode respectively.

Optionally, the outlet port is configured to allow the exit of by-products generated during the electrochemical reactions within the fuel cell, including water vapor and any unused reactants.

Optionally, both the inlet and outlet ports are designed to maintain a controlled environment within the fuel cell system. For example, pressure regulation and prevention of reactant leakage may be implemented.

Optionally, the multi-parameter optical measurement system includes a first fiber optic sensor and a second fiber optic sensor both arranged at a flow pathway within the fuel cell, wherein the first and second fiber optic sensors are placed in close proximity to each other within the flow pathway, and wherein the temperature difference between readings from the first and second fiber optic sensors is configured to be used in determining a value indicative of a flow rate along the areas adjacent to said first and second fiber optic sensors inside the flow pathway.

This provides an improved way for determining flow rates by using temperature differences between closely placed fiber optic sensors. Flow rates can be measured without the need for additional, separate flow sensors, thereby simplifying the system and reducing its complexity.

By using fiber optic sensors that are already a part of the multi-parameter optical measurement system, this method integrates flow rate measurement into the existing infrastructure. This integration eliminates the need for separate flow sensors, which simplifies the overall design of the fuel cell. A less complex system is generally more reliable and easier to maintain, reducing potential points of failure and simplifying operational processes.

The use of temperature differences to infer flow rates is a direct measurement technique. Since the flow of fluids affects temperature distribution, the variance in temperature readings between two closely placed sensors can be accurately correlated to the flow rate. This method provides precise and localized measurements, offering a clear and direct understanding of the fluid dynamics within the fuel cell.

Optionally, the multi-parameter optical measurement system is configured to detect liquid formation within the fuel cell, and wherein at least one sensing point along the at least one optical fiber is equipped with a fiber optic sensor configured to identify the presence and/or characteristics of liquid formed during the chemical reaction or electrolyte medium interaction by the difference in thermal capacity between gas and liquid.

The gas liquid two phase flow is an important aspect of the process, as it directly relates to the rate and efficiency of the electricity production rate. The presence, size, frequency, and distribution of these bubbles can indicate the effectiveness of the reaction, as well as the overall health and performance of the fuel cell. Traditional methods of monitoring these parameters may be intrusive or less accurate, disrupting the process or failing to provide detailed data.

By employing optical sensors, a non-intrusive and highly accurate sensing is obtained. Optical sensors, particularly those designed to be sensitive to changes in light patterns caused by gas bubbles, can detect subtle variations in the electrolytic environment. These sensors can analyze the light refracted, reflected, or scattered by gas bubbles, thus providing valuable information about their presence and characteristics.

The ability to detect and analyze gas bubbles in liquid in real-time offers several operational advantages. the data gathered from liquid forming in gas environment can be used to predict and prevent potential issues within the fuel cell, such as electrolyte degradation or membrane fouling, which can arise from irregularities in gas water ratio.

Additionally, monitoring water formation can provide insights into the chemical composition and purity of the generated gases. Anomalies in water formation can indicate impurities or changes in the electrolyte composition, which may affect the quality of the produced gases.

Optionally, the at least one optical fiber includes a combination of one or more Fiber Bragg Grating (FBG) sensors and one or more interferometer sensors, and wherein the FBG and interferometer sensors are configured to measure selected operational parameters.

This combination provides diverse and comprehensive monitoring capabilities within a single fiber, enhancing the system's efficiency and effectiveness in a space-limited environment like an fuel cell.

FBG sensors are renowned for their precision in measuring parameters like temperature and strain by reflecting specific wavelengths of light. Interferometer sensors, on the other hand, are adept at detecting changes in optical paths. By combining these two types of sensors within a single fiber, the system can simultaneously monitor a wide range of operational parameters. This multifunctionality is particularly beneficial in environments where space is at a premium, such as within the compact structure of an fuel cell.

The integration of both sensor types in one fiber allows for cross-validation of data. For instance, changes in temperature detected by the FBG sensor can be corroborated by the interferometer sensor's readings. This crossreferencing enhances the overall accuracy and reliability of the system, leading to more precise control and optimization of the fuel cell's performance.

Incorporating both sensor types into a single optical fiber significantly reduces the need for multiple, separate sensor systems. This consolidation not only saves space within the fuel cell, which can be important given the compact nature of these devices, but also reduces the overall cost and complexity of the measurement system. It simplifies the installation and maintenance processes, making the system more user-friendly and efficient.

The combination of FBG and interferometer sensors in a single fiber can offer improved sensitivity and quicker response times to changes in operational conditions.

In some examples, the FBG and interferometer sensors can be tuned to different specific operational conditions, such as high temperature or high pressure environments.

Optionally, the interferometer sensors are being configured to detect changes in refractive index associated with various operational parameters.

Optionally, the one or more Fiber Bragg Grating (FBG) sensors and the one or more fiber interferometer sensors, which are embedded within the same optical fiber, are configured to operate at different wavelengths such that the one or more FBG sensors and the one or more interferometer sensors are allowed to function independently and do not interfere with each other's measurements despite their co-location within the single optical fiber.

This configuration prevents the sensors from interfering with each other's measurements despite being closely located within the same optical fiber. This can maintain the accuracy and reliability of the measurements, thereby enhancing the overall performance of the measurement system.

In typical sensor systems, when multiple sensors are closely located within a single optical fiber, there's a significant risk of interference if no proper multiplexing technology is used. This interference can arise from overlapping sensor signals, leading to erroneous readings and compromised data integrity. However, this can be advantageously prevented by configuring the FBG and interferometer sensors to function at different wavelengths.

FBG sensors work by reflecting specific wavelengths of light where the grating reflects light at its Bragg wavelength and transmits other wavelengths. Interferometer sensors, on the other hand, typically operate based on the principle of light interference, which can be optimized to function at a wavelength different from the FBG sensors.

By operating at different wavelengths, each sensor type can perform its specific function without any cross-talk or interference from the other. This is called Wavelength Domain Multiplexing (WDM). This separation ensures that the FBG sensors can accurately measure parameters like strain or temperature, while the interferometer sensors can simultaneously perform tasks such as detecting changes in refractive index, important for gas sensing, without their signals getting mixed.

The non-interference can improve the accuracy and reliability of the measurements, which is particularly important in an fuel cell environment where precise data on operational parameters like temperature, strain, gas composition, and refractive index changes are vital for efficient and safe operation. Moreover, this design enhances the overall performance of the measurement system by enabling comprehensive monitoring within a single, compact fiber optic setup, thus reducing complexity and increasing the system's efficiency.

In some examples, the optical fiber can incorporate wavelength division multiplexing, allowing for a broader range of wavelengths to be used simultaneously without interference. This would enable a larger number of sensors to operate independently on the same fiber.

Optionally, the interferometer sensor integrated within the at least one optical fiber is a hollow-core fiber sensor, which is configured for gas sensing within the fuel cell, and wherein the hollow-core fiber sensor is arranged for detecting and analyzing gas composition and/or gas concentration.

The hollow-core fiber sensor, specifically designed for gas sensing within the fuel cell, can be configured to detect and analyzing gas composition and/or gas concentration. The use of a hollow-core sensor enhances the system's ability to precisely detect and analyze gas properties.

Hollow-core fiber sensors offer a unique advantage in that they can contain and guide the gas within their core for direct interaction with the light guided in the hollow core of the fiber. This direct interaction increases the sensitivity and specificity of the gas detection, as the light in the fiber can interact more effectively with the gas molecules. This results in more accurate and reliable gas sensing compared to traditional gas sensors.

By providing real-time data on the gas environment within the fuel cell, the hollow-core fiber sensor plays an important role in ensuring safety. For example, it can detect the buildup of hazardous gases before they reach dangerous levels.

The inclusion of the hollow-core fiber sensor complements the other sensors in the multi-parameter optical measurement system. By adding gas sensing capabilities, the system becomes more comprehensive, allowing for a more complete assessment of the fuel cell's operational parameters.

Optionally, multiple optical sensors are used to measure the same operational parameter for monitoring the distribution and/or gradient of the operational parameter in the fuel cell.

This configuration allows for the mapping of operational parameters across different regions of the fuel cell. By having multiple measurement points, it becomes possible to understand how a particular parameter varies within the system. For instance, temperature gradients or pressure variations across the fuel cell can be closely monitored, providing a more comprehensive picture of the internal operating conditions.

The ability to measure gradients (changes in a parameter over a certain distance or area) can be important for identifying potential issues such as hot spots, flow inconsistencies, or uneven distribution of reactants. This information is vital for prevent escalate into more significant problems.

Monitoring of operational parameters with such granularity also contributes to the safety of the fuel cell. Early detection of abnormal conditions, like excessive pressure build-up or extreme temperature variations, allows for timely interventions, thereby preventing hazardous situations.

The detailed data collected by multiple sensors enables predictive maintenance strategies. By analyzing trends and patterns in the operational parameters, potential issues can be identified and addressed before they lead to system failures, reducing downtime and maintenance costs.

By using multiple sensors to measure the same parameter, the system mitigates the risk of inaccurate readings due to sensor malfunction or localized anomalies. Each sensor acts as a check against the others, ensuring that the data collected is reliable and reflective of the true operational conditions within the fuel cell.

In some examples, the sensing points can be arranged in a matrix or grid pattern within the fuel cell, allowing for a 3D mapping of the operational parameters. This design can facilitate a more comprehensive understanding of the gradients and distributions of the parameters within the fuel cell.

Optionally, the multi-parameter optical measurement system is configured to measure the distribution of the same operational parameter within different regions of the fuel cell. In this way, operational inconsistencies and potential malfunctions within the fuel cell can be better identified.

Optionally, the electrolyte medium comprises a proton exchange membrane configured to conduct protons while acting as an electronic insulator and a gas barrier separating the anode and the cathode; the fuel input mechanism is configured to supply hydrogen to the anode; and the oxidant input mechanism is configured to supply oxygen or air to the cathode.

In some examples, sensing points are provided at or on the proton exchange membrane.

Optionally, one or more flow channels are integrated within the housing structure adjacent to at least one of the anode or the cathode, wherein the flow channels are configured to distribute the fuel and the oxidant across the surfaces of the anode and the cathode respectively, and to facilitate the removal of reaction products; wherein the flow channels adjacent to the anode are configured to evenly distribute hydrogen fuel across the surface of the anode, and the flow channels adjacent to the cathode are configured to evenly distribute oxygen or air across the surface of the cathode.

According to an aspect, the invention provides for a method of arranging a fuel cell, comprising the steps of: providing a housing structure; providing an anode and a cathode within the housing structure, wherein the anode and cathode are configured for a chemical reaction; providing an electrolyte medium within the housing structure to facilitate ion transfer between the anode and the cathode; providing a fuel input mechanism for supplying fuel to the anode; providing an oxidant input mechanism for supplying an oxidant to the cathode; providing an energy output interface to output electrical energy generated by the fuel cell system; integrating a multi-parameter optical measurement system within the fuel cell, wherein the multi-parameter optical measurement system is configured to monitor multiple operational parameters; incorporating at least one optical fiber within the fuel cell as part of the multi-parameter optical measurement system; distributing multiple sensing points along the at least one optical fiber within the fuel cell; and configuring each sensing point to detect one or more operational parameters within the fuel cell.

The integration of the multi-parameter optical measurement system within the fuel cell may involve the strategic placement and distribution of optical fibers and sensors, the distribution of sensing points along these fibers, and the specific configuration of each sensing point for detecting various operational parameters.

In some examples, the optical fibers and sensors are integrated in a manner that ensures they cover the entire operational scope of the fuel cell. The measurement system track multiple operational parameters simultaneously, which can be important for a detailed and nuanced understanding of the fuel cell's functioning. This enables real-time detection of anomalies and enhances the overall safety and efficiency of the system. By capturing a complete picture of the fuel cell's operations, the system can facilitate proactive adjustments and maintenance, thereby extending the lifespan and performance of the fuel cell.

The spatial distribution of sensing points can ensure that data is captured from all relevant areas within the system. Each sensing point acts as a localized data collection node, providing specific information about its immediate surroundings. This granular level of monitoring can be important for capturing detailed operational data across the fuel cell. By having multiple points of data collection, the system can more accurately pinpoint issues, understand the interplay of various operational parameters, and provide a more complete view of the fuel cell's performance.

The individual sensors can be optimized to sense the target parameter e.g. temperature, strain, pressure, gas bubble in liquid etc. The relation between data from different sensor can also provide information about flow direction/speed, etc. This enables a multi-parameter sensing system based on a single sensor technology platform. The measurement system may also include interferometric type of sensor for gas concentration measurement.

The proposed system includes an array of multiple fiber sensors in a single optical fiber which can be routed in the complex flow channel inside an fuel cell to monitor different relevant parameters at the different critical locations. The fiber sensors can either be grating or interferometer based and the sensors in a single fiber will be interrogated without mutual interference.

The measurement system can measure combination of different parameters including temperature at different locations inside the fuel cell to reveal information and condition of the fuel cell operation.

In some examples, fiber optic sensors are integrated directly into the anode or cathode plates. The optical fibers can be made of an inert material, typically glass.

According to an aspect, the invention provides for a multi-parameter fiber optic sensing system adapted to be integrated in an fuel cell, the multi-parameter optical measurement system being configured to monitor multiple operational parameters, wherein the multi-parameter optical measurement system comprises at least one optical fiber configured to be extendable within the fuel cell, and wherein multiple sensing points are distributed along said at least one optical fiber, and wherein each sensing point is configured to detect one or more operational parameters.

It will be appreciated that the term "flow channels" or "fluid channels" as used in the context of this disclosure can be understood to encompass channels within the fuel cell designed to facilitate the flow of various fluid types, including both liquid and gas, or multi-phase (e.g. two-phase) medium. It is recognized that the fuel cell's design and operation are not limited to the handling of a singular phase of matter but are instead capable of efficiently managing a diverse range of fluid states, whether singularly in the form of either liquid or gas, or in a combined form as a two-phase medium.

It will be appreciated that any of the aspects, features and options described in view of the fuel cell apply equally to the method and the described system and use. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a multi-parameter optical measurement system;
Fig. 2 shows a schematic diagram of an embodiment of a multi-parameter optical measurement system;
Fig. 3 shows a schematic diagram of an embodiment of a multi-parameter optical measurement system;
Fig. 4 shows a schematic diagram of an embodiment of a multi-parameter optical measurement system;
Fig. 5 shows a schematic diagram of an embodiment of a multi-parameter optical measurement system;
Fig. 6 shows a schematic diagram of an embodiment of a multi-parameter optical measurement system;
Fig. 7 shows a schematic diagram of an embodiment of a multi-parameter optical measurement system; and
Fig. 8 shows a schematic diagram of an embodiment of a multi-parameter optical measurement system.

### DETAILED DESCRIPTION

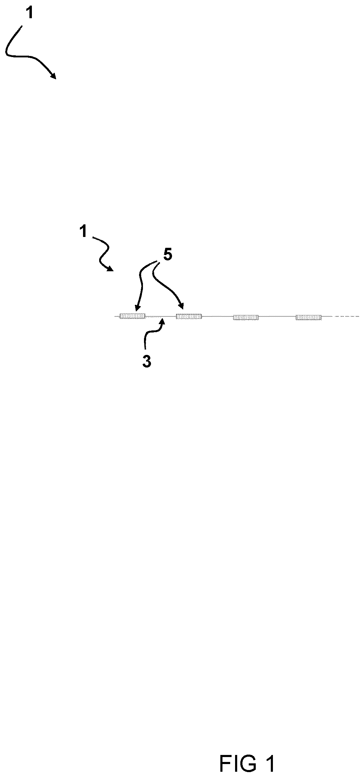

Fig. 1 shows a schematic diagram of an embodiment of a multi-parameter optical measurement system 1 that is integrated in an fuel cell (not shown) for generating electrical power. The fuel cell includes a housing structure; at least one fuel cell contained within the housing structure, the fuel cell comprising an anode and a cathode separated by an ion-conducting membrane; inlets for hydrogen and oxygen, each fluidly connected to the electrolytic cell to provide as fuel input; an electrical power generation operatively connected to the anode and cathode to collect the electricity output; and outlet of water as exhaustion output. The fuel cell embedded multi-parameter optical measurement system 1 is configured to monitor multiple operational parameters. At least one optical fiber 3 is provided that is configured to extend within the fuel cell. Multiple sensing points 5 are distributed along said at least one optical fiber 3, each sensing point 5 is configured to detect one or more operational parameters within the fuel cell.

The fuel cell converts chemical energy into electrical energy. The fuel cell has an electrolyte that facilitates ion transport. The electrolyte transports ions from the anode to the cathode. In a fuel cell, the anode is where hydrogen is oxidized, and the cathode is where oxygen is reduced. Catalysts can be used at the electrodes to facilitate the electrochemical reactions. These catalysts lower the activation energy required for the reactions, making the processes more efficient. The fuel cell can employ a dedicated membrane, like a Proton Exchange Membrane or PEM, that allows only specific ions to pass through while preventing the mixing of reactants. The fuel cell may have gas diffusion layers that help distribute gases evenly across the catalyst surface, and, additionally or alternatively, bipolar plates that aid in distributing the required gases to the electrodes and also help in current collection. In a fuel cell, water is produced at the cathode and needs to be removed efficiently.

In fuel cells, flow channels may be designed to distribute the reactant gases (hydrogen and oxygen) evenly over the surface of the electrodes. They may also be configured to facilitate the removal of the byproduct (usually water) and heat generated during the reaction.

The channels can be designed to ensure uniform distribution of gases, which is important for maximizing the reaction surface area and thus the efficiency of the fuel cell. Poorly designed channels can lead to uneven distribution, leading to 'hot spots' and reduced efficiency, and over long time causing faster degradation and shorter lifetime. The optical measurement system of the disclosure provides an improved monitoring in or at the channels.

For example, in PEM fuel cells, water management is important. The channels must be designed to remove the water produced at the cathode efficiently without flooding the membrane, which would impede gas flow and ion conductivity.

The channels also play a role in managing the heat produced during the electrochemical reaction, helping to maintain an optimal operating temperature.

Detailed information from within the fuel cell may be important, contrasting with the standard practice of placing a single external sensor. More valuable data can be obtained by placing sensors within specific cell parts, like channels or layers.

Optical fibers offer enhanced design flexibility. They can be bent with small radii, allowing various routing patterns through the fuel cell. This flexibility applies to sensor placement and fiber routing within the cell.

Fiber optics can be integrated in different locations in the fuel cell. For example, in flow channels, either straight or curved. Additionally or alternatively, sensors can be placed at the membranes. Integrating sensors at the membrane layers allows for detailed monitoring. Additionally or alternatively, sensors can be placed at the inlet and/or outlet ports. These points may be connected through all the plates and cells, allowing the fiber to run through multiple cells for comprehensive measurement.

The placement of sensors can be targeted and based on the need for monitoring specific parameters. Different types of sensors may be required depending on the location within the fuel cell and the process being monitored. Flow sensors may be used to ensure unobstructed flow in each channel, while temperature sensors can be used for temperature mapping.

Flow and temperature sensors provide important sensory data related to the operation of the fuel cell. However, various other parameters may also be monitored, such as for example mechanical, pressure, etc.

Monitoring gas levels or analyzing gas may also play an important role. For example, monitoring hydrogen levels at the inlet or outlet of the fuel cell can be important. Early detection of gas crossover near the membrane and monitoring the quality of hydrogen, including detecting contaminants, can be important for safety and efficiency.

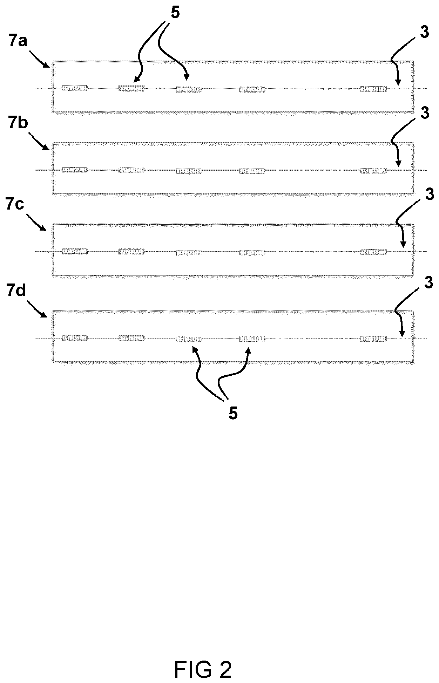

Fig. 2 shows a schematic diagram of an embodiment of a multi-parameter optical measurement system 1. In this example, the measurement system 1 is provided with multiple optical fibers 3, each having multiple sensing points 5. These multiple optical fibers may be part of different sub-units 7a-d that are distributed at different locations within the fuel cell.

The ability to integrate different types of sensors (e.g., for temperature, bubble in liquid, gas analysis) within a single fiber optic line is a significant advantage. This integration allows for simultaneous and comprehensive monitoring of multiple parameters, enhancing the efficiency and effectiveness of the monitoring process.

The system's design enables the tailoring of sensor placements and combinations to specific processes within the fuel cells. This customization ensures more detailed and targeted data collection, optimizing the monitoring process.

The multi-parameter fiber optic measurement system can be integrated at multiple locations within the fuel cell, as it has relatively small dimensions. The fiber optic system can fit into the intricate and narrow channels of fuel cells, enabling accurate measurements within these confined spaces. The fiber optic sensor system can provide spatial information about multiple relevant parameters.

The small bending radius of the optical fibers allows for versatile routing patterns, providing comprehensive coverage and enabling more detailed data collection. The measurement system enables precise, localized, and comprehensive monitoring of various critical operational parameters within the fuel cell.

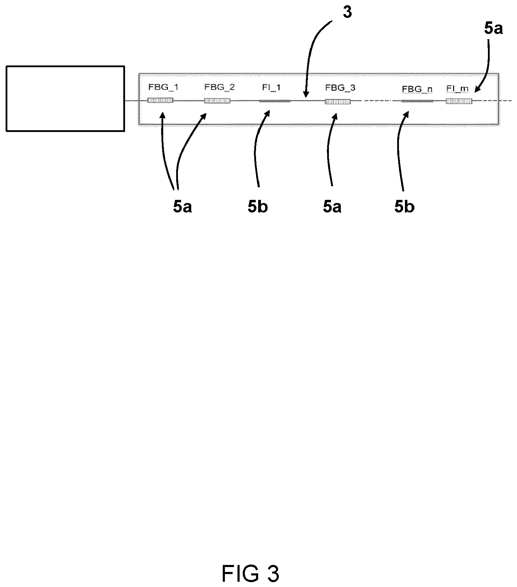

Fig. 3 shows a schematic diagram of an embodiment of a multi-parameter optical measurement system 1. In this example, the optical fiber 3 has a combination of FBG sensors 5a and interferometer sensors 5b, and wherein the FBG and interferometer sensors are configured to measure selected operational parameters.

The FBG sensors 5a and the fiber interferometer sensors 5b, are embedded within the same optical fiber 3, and are configured to operate at different wavelengths such that the FBG sensors 5a and the interferometer sensors 5b are allowed to function independently and do not interfere with each other's measurements despite their close or co-location within the single optical fiber 3.

Various parameters may be monitored. In some examples, temperature variations are used to infer flow characteristics. This can eliminate the need for a separate flow sensor in an advantageous way, deriving the same information from temperature measurements using fiber optic sensors. The time correlation between the readings from the two temperature sensors provides information about the flow. For example, the flow characteristics is derived from at least two temperature sensors. By placing these sensors relatively close to each other, the correlation between their readings can be used to monitor flow, based on the principle that temperature fluctuations in a fluid affect a first fiber grating sensor FBG1 first and then a second fiber grating sensor FBG2. Knowing the distance between these two points allows for the calculation of flow rate based on correlation of the temperature changes.

Integrating both FBG sensors and interferometer sensors into a single optical fiber offers targeted measurements and greater functionality in space-limited fuel cell applications.

The measurement system's flexibility allows it to be tailored to different fuel cell designs and integrated into various locations such as flow channels, membranes, and inlet/outlet ports. This adaptability is important given the diversity of fuel cell designs and the specific monitoring requirements of each design.

The multi-parameter fiber optic measurement system 1 can be fit into these small spaces, enabling precise measurements inside the fuel cell. Furthermore, the small radii bending capability of the optical fibers allows for versatile routing patterns through the fuel cell, providing comprehensive coverage and enabling more detailed and valuable data collection compared to external sensors.

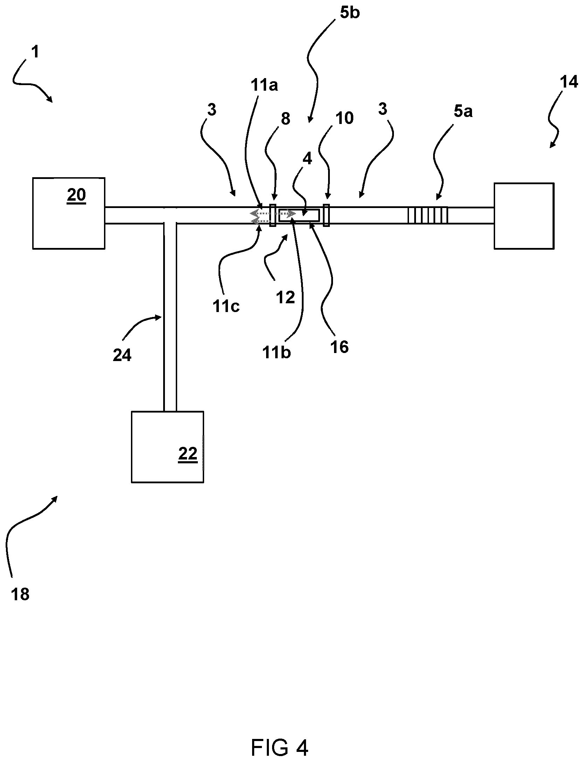

Fig. 4 shows a schematic diagram of an embodiment of a multi-parameter optical measurement system 1 including one or more FBG sensors and one or more fiber interferometer sensors 5b. In this example, the interferometer sensor 5b integrated within the optical fiber 3 is a hollow-core fiber sensor, which is configured for gas sensing within the fuel cell. The hollow-core fiber sensor can be arranged for detecting and analyzing gas composition and/or gas concentration.

The hollow core fiber sensor can be configured to detect a substance concentration in a medium 4 which fills the hollow core via the connection holes to the environment. In this example, the measurement system 1 comprises: a measurement optical fiber 3 including a first reflecting element 8, a second reflecting element 10 and a hollow core fiber 12 arranged in between the first reflecting element 8 and the second reflecting element 10, the hollow core fiber 12 being configured to receive the medium 4. The measurement system 1 may be provided with an excitation unit 14 configured to generate a photothermal excitation effect in the core 16 of the hollow core fiber 12.

In some examples, a sensing unit 18 is provided that comprises a light source 20 configured to direct light towards the measurement fiber 3 with the hollow core fiber 12, wherein an incident light is divided on the first reflecting element 8 of the measurement optical fiber 3 into a transmitted light 11b and a reflected light 11a, and wherein the transmitted light 11b returns to and passes the first reflecting element 8 after being reflected by the second reflecting element 10 of the measurement optical fiber, and wherein the reflected light 11a and the returned transmitted light 11c are guided to a detector 22 of the sensing unit 18 by means of an optical line 24; wherein the sensing unit 18 is adapted to prevent interference between the reflected light 11a and the returned transmitted light 11c in the optical line 24.

Although the hollow core fiber may extend all the way between the first reflective element 8 and the second reflecting element 10, it is also possible that the hollow core fiber only extends over a portion of the space between the first reflective element 8 and the second reflecting element 10.

In some examples, the excitation unit 14 includes a pump laser. The pump laser may also be arranged at the side of the sensing unit.

The sensing unit 18 may use light reflected by two different reflecting elements 8, 10 to sense the effect of an excitation unit on a medium 4 inside a hollow core fiber 12. The light source 20 of the sensing unit 18 can be configured to emit light with a wavelength that does not overlap with that of the excitation unit 14, and the coherence length of the light source may be shorter than the distance between the two reflections. This prevents direct interference between the two beams reflected towards the detector 22, and the interference is only obtained at the detector 22. The two reflected light beams can be guided to the detector using an optical line 24, wherein interference in said optical line is prevented due to the configuration of the measurement system 1.

In some examples, the first reflecting element 8 may be a partial reflector. Some light may pass through the first reflecting element 8 towards the second reflecting element 10. The reflections of the light (cf. electromagnetic wave) combined in the optical line 24 do not interfere with each other because path length difference is larger than the coherence length of the light generated by the light source of the sensing unit 18.

Advantageously, by suitably selecting the coherence length, direct interference between the received reflected light and returned transmitted light in the optical line can be effectively avoided. The stability of the measurements can be significantly enhanced. The accuracy of the measurements can be increased as the measurements become less sensitive to the change in intensity.

Using a hollow-core fiber for gas sensing, alongside an FBG sensor and a fiber interferometer, can be more effective if they operate at different wavelengths. This can effectively ensure non-interference and optimal functioning of the combined sensor system. Advantageously, the combination provides a broader range of sensing capabilities, as each sensor type can operate independently without affecting the other's performance.

The HCF can be connected to the fiber optic sensor system using standard single mode optical fiber which is also use to manufacture FBG. This enables the configuration of combining HCF with FBG in the single mode connection fiber for the HCF.

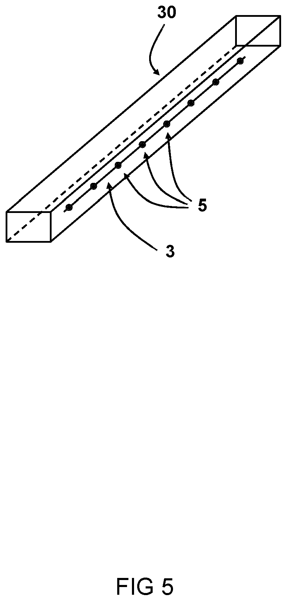

Fig. 5 shows a schematic diagram of an embodiment of a multi-parameter optical measurement system 1. In this example, the a optical fiber 3 is arranged within at least one flow channel 30 of the fuel cell, the flow channel 30 being configured to facilitate a flow of fluids within the fuel cell. The optical fiber follows at least a portion of the path of the one or more flow channels 30.

In some examples, fibers can be routed through one channel and out to another for comprehensive channel coverage. This routing can be optimized based on specific requirements/conditions, such as symmetric temperature distribution. If the distribution is symmetric, the fiber may only need to route through one half of the flow channel for example.

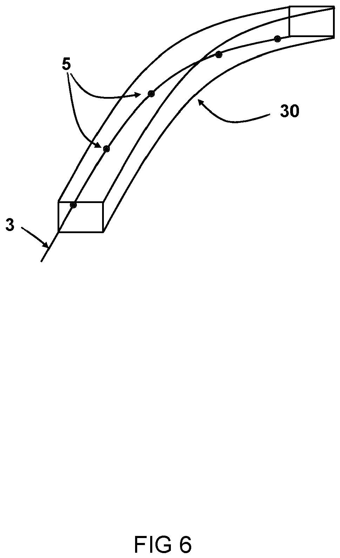

Fig. 6 shows a schematic diagram of an exemplary embodiment of a multi-parameter optical measurement system 1, with the at least one optical fiber 3 being arranged within a curved flow channel 30 of the fuel cell. The optical fiber 3 can bend and follow the curvature of the curved flow channel 30.

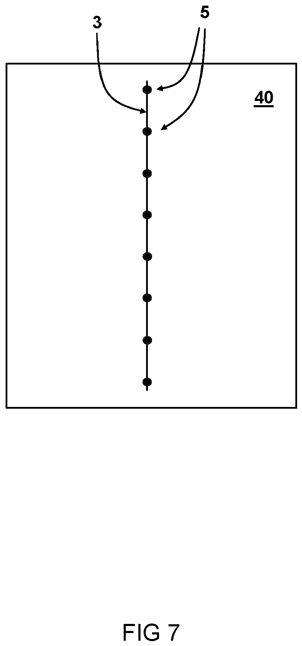

Fig. 7 shows a schematic diagram of an embodiment of a multi-parameter optical measurement system 1. The exemplary optical fiber of the multi-parameter optical measurement system 1 is arranged in/at one or more layers or plate structures 40 that are arranged within the housing structure of the fuel cell.

In some examples, the at least one optical fiber 3 is attached to the surface of one or more layers or plate structures within the housing structure. Various fixation techniques may be employed. For examples, the optical fiber 3 may be glued to the surface of the layers or plate structures 40. However, it is also possible that the optical fiber 3 attached via other means, such as for example physical attachment units.

In some examples, advantageously, the at least one optical fiber is integrally embedded within one or more layers or plate structures 40 of the fuel cell.

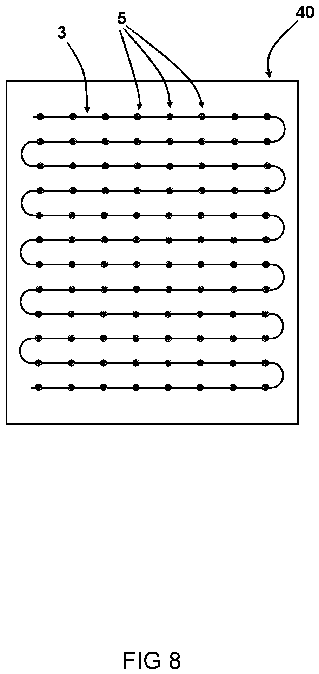

Fig. 8 shows a schematic diagram of an embodiment of a multi-parameter optical measurement system 1. In this example, the optical fiber is bent in a structured pattern following a meandering path, such that a structured matrix or mesh of measurement points is obtained at the layers or plate structures 40 of the fuel cell.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A fuel cell, comprising a housing structure; an anode and a cathode contained within the housing structure, wherein the anode and cathode are configured for a chemical reaction; an electrolyte medium positioned to facilitate ion transfer between the anode and the cathode; a fuel input mechanism for supplying fuel to the anode; an oxidant input mechanism for supplying an oxidant to the cathode; an energy output interface configured to output electrical energy generated by the fuel cell system; and wherein a multi-parameter optical measurement system is integrated within the fuel cell, the multi-parameter optical measurement system being configured to monitor multiple operational parameters, wherein the multi-parameter optical measurement system comprises at least one optical fiber configured to extend within the fuel cell, wherein multiple sensing points are distributed along said at least one optical fiber, and wherein each sensing point is configured to detect one or more operational parameters within the fuel cell.

2. The fuel cell according to claim 1, wherein the multi-parameter optical measurement system further comprises a plurality of sensor types integrated within a same optical fiber, each sensor type being distinct and configured to monitor a specific operational parameter of the fuel cell, and wherein the at least one optical fiber is routed through multiple parts of the fuel cell in order to monitor operational parameters in different regions of the fuel cell.

3. The fuel cell according to claim 1 or 2, wherein the multi-parameter optical measurement system includes at least two of, preferably, at least three of: a temperature sensor, a strain sensor, a fluid flow sensor, a fluid characterization sensor, a gas-in-liquid detection sensor, a pressure sensor, a gas sensing sensor, or a chemical composition sensor.

4. The fuel cell according to claim 1, 2 or 3, wherein the at least one optical fiber is arranged within one or more flow channels of the fuel cell, the flow channels being configured to facilitate a flow of fluids within the fuel cell, and wherein the optical fiber follows at least a portion of the path of the one or more flow channels.

5. The fuel cell according to any one of the preceding claims, wherein the at least one optical fiber is arranged in one or more layers or plate structures arranged within the housing structure of the fuel cell.

6. The fuel cell according to claim 5, wherein the at least one optical fiber is glued to the surface of one or more layers or plate structures within the housing structure, such that the optical fiber remains in a fixed position relative to the anode and cathode.

7. The fuel cell according to claim 5, wherein the at least one optical fiber is integrally embedded within one or more layers or plate structures of the fuel cell.

8. The fuel cell according to any one of the preceding claims 5-7, wherein at least one optical fiber is arranged at one or more membranes within the fuel cell, and/or at or adjacent to at least one of an inlet line or outlet line of the fuel cell.

9. The fuel cell according to any one of the preceding claims, wherein the multi-parameter optical measurement system includes a first fiber optic sensor and a second fiber optic sensor both arranged at a flow pathway within the fuel cell, wherein the first and second fiber optic sensors are placed in close proximity to each other within the flow pathway, and wherein the temperature difference between readings from the first and second fiber optic sensors is configured to be used in determining a value indicative of a flow rate along the areas adjacent to said first and second fiber optic sensors inside the flow pathway.

10. The fuel cell according to any one of the preceding claims, wherein the multi-parameter optical measurement system is configured to detect liquid formation within the fuel cell, and wherein at least one sensing point along the at least one optical fiber is equipped with a fiber optic sensor configured to identify the presence and/or characteristics of liquid formed during the chemical reaction or electrolyte medium interaction by the difference in thermal capacity between gas and liquid.

11. The fuel cell according to any one of the preceding claims, wherein the at least one optical fiber includes a combination of one or more Fiber Bragg Grating (FBG) sensors and one or more interferometer sensors, and wherein the FBG and interferometer sensors are configured to measure selected operational parameters.

12. The fuel cell according to claim 11, wherein the one or more Fiber Bragg Grating (FBG) sensors and the one or more fiber interferometer sensors, which are embedded within the same optical fiber, are configured to operate at different wavelengths such that the one or more FBG sensors and the one or more interferometer sensors are allowed to function independently and do not interfere with each other's measurements despite their co-location within the single optical fiber.

13. The fuel cell according to any one of the preceding claims 11-12, wherein the interferometer sensor integrated within the at least one optical fiber is a hollow-core fiber sensor, which is configured for gas sensing within the fuel cell, and wherein the hollow-core fiber sensor is arranged for detecting and analyzing gas composition and/or gas concentration.

14. The fuel cell according to any one of the preceding claims, wherein multiple optical sensors are used to measure the same operational parameter for monitoring the distribution and/or gradient of the operational parameter in the fuel cell.

15. A method of arranging a fuel cell, comprising the steps of:
providing a housing structure;
providing an anode and a cathode within the housing structure, wherein the anode and cathode are configured for a chemical reaction;
providing an electrolyte medium within the housing structure to facilitate ion transfer between the anode and the cathode;
providing a fuel input mechanism for supplying fuel to the anode;
providing an oxidant input mechanism for supplying an oxidant to the cathode;
providing an energy output interface to output electrical energy generated by the fuel cell system;
integrating a multi-parameter optical measurement system within the fuel cell, wherein the multi-parameter optical measurement system is configured to monitor multiple operational parameters;
incorporating at least one optical fiber within the fuel cell as part of the multi-parameter optical measurement system;
distributing multiple sensing points along the at least one optical fiber within the fuel cell; and
configuring each sensing point to detect one or more operational parameters within the fuel cell.
